# EUROPÄISCHE PATENTSCHRIFT

(11) **EP 0 670 441 B1**
(45) Veröffentlichungstag und Bekanntmachung des Hinweises auf die Patenterteilung: **22.03.2000**
(21) Anmeldenummer: 95200077.6
(22) Anmeldetag: 13.01.1995
(51) Int. Cl.: F16J 10/04, B22D 19/14, C22C 1/10, B22F 3/26, F16C 33/24

(54) **Gleitlagerung**
Slide bearing
Palier à glissement

(30) Priorität: 25.02.1994 DE 4406191
(43) Veröffentlichungstag der Anmeldung: 06.09.1995
(73) Patentinhaber: KS Aluminium Technologie Aktiengesellschaft, 74172 Neckarsulm (DE)
(72) Erfinder: Stenzel, Otto W., Dr., D-71543 Neuhütten (DE); Sick, Georg, Dr., D-71717 Beilstein (DE); Köhler, Eduard, Dr., D-74172 Neckarsulm (DE); Möding, Herbert, Dr., D-74177 Friedrichshall (DE); Niehues, Jürgen, D-74229 Oedheim (DE)
(74) Vertreter: Dreiss, Fuhlendorf, Steimle & Becker

(56) Entgegenhaltungen:
- EP-A- 0 449 356
- WO-A-91/12350
- WO-A-91/17279
- DE-A- 2 252 797
- US-A- 4 936 270

## Beschreibung

Die Erfindung betrifft eine gegossene Gleitlagerung zur Führung und Abstützung rotierender oder oszillierender, radial oder axial bewegter Maschinenteile, nach dem Oberbegriff des Anspruchs 1. Mit "Formkörper" wird ein Körper bezeichnet, der von ungezählten, untereinander verbundenen Hohlräumen und Kanälen durchsetzt ist.

Eine derartige Gleitlagerung ist aus der US-A-4 936 270 bekannt. Bei dieser Gleitlagerung wird ein metallischer oder keramischer Sinterkörper als poröser Formkörper mit Matrixmetall eines Zylinderblocks im Fahrzeugbau infiltriert und dadurch als Verstärkungsteil an den Zylinderblock angefügt.

Hiervon ausgehend liegt der vorliegenden Erfindung die Aufgabe zugrunde eine Gleitlagerung zu schaffen, die gute tribologische Eigenschaften, d.h. möglichst wenig Reibung und Verschleiß aufweist. Ferner wird angestrebt, den Verschleiß der für die Bearbeitung der Gleitfläche einzusetzenden Werkzeuge zu senken.

Auch sollen bei der mechanischen Bearbeitung der Gleitfläche keine Hartstoffteile aus dieser ausbrechen. Der verwendete Hartstoff soll ferner ausreichende Notlaufeigenschaften besitzen und mit dem Gegenwerkstoff verträglich sein, d.h. geringe Neigung zum Fressen aufweisen.

Diese Aufgabe wird gelöst durch eine Gleitlagerung mit den Merkmalen des Anspruches 1.

Zweckmäßige Weiterbildungen der Erfindung sind in den abhängigen Ansprüchen beschrieben.

Aus DE-A-2 252 797 ist bereits der Einsatz von pulverförmigen Hartstoffen mit einer Korngröße von 20 - 100 µm bekannt. Infiltrierbare Formkörper sind jedoch nicht erwähnt.

Die Verwendung anorganischer Bindemittel zum Herstellen eines formstabilen Füllkörper ist aus WO-A-91/17279 bekannt.

Durch die Verwendung der erfindungsgemäß ausgebildeten Formkörper wird deren Infiltrierbarkeit mit Leichtmetallmatrix deutlich verbessert und damit ein porenarmes Ausfüllen der Hohlräume erzielt, die homogene Verteilung der Teile des Formkörpers in der Gleitfläche erreicht und gute Verschleiß- und Notlaufeigenschaften erzielt. Die flächenmäßige Größe der in der Gleitfläche liegenden Teile des Formkörpers läßt eine gute Bearbeitbarkeit bei vergleichsweise geringem Verschleiß der Bearbeitungswerkzeuge zu. Bei einem gegossenen Einzelzylinder bzw. Mehrzylinderblock sollte der nicht mit Leichtmetallmatrix penetrierte Anteil der Hohlräume sehr klein sein, um zu große Schmierstoffdepots in der Zylinderlauffläche zu vermeiden. Bei anderen Anwendungen wie z.B. Gleitlagern spielt der Anteil der nicht penetrierten Hohlräume eine untergeordnete Rolle.

Die Auswahl des harten Stoffs ist derart, dass dieser möglichst wenig Reibung, d.h. Verlustleistung, und Verschleiß, d.h. Materialabtrag, verursacht, gegenüber der Schmelze der Leichtmetallmatrix gut benetzbar ist und eine gute Haftung gegenüber der Leichtmetallmatrix aufweist. Insbesondere soll der harte Stoff eine stoffschlüssige Verbindung mit der Leichtmetallmatrix eingehen, falls das nicht möglich ist, ist es angebracht, den Formkörper und die Leichtmetallmatrix über eine Schicht eines Haftvermittlers zu verbinden.

Zur weiteren Verbesserung der Formstabilität der Formkörper hat es sich als zweckmäßig erwiesen, wenn der Formkörper auf einen dünnwandigen Träger aus Blech, Sieb, Gewebematte oder Vliesmatte aufgebracht ist, der je nach Verwendungszweck als Hohlzylinder, Formschale oder dergleichen ausgebildet ist.

Für die Infiltration des Formkörpers mit der Aluminiumlegierung reichen im allgemeinen Drücke bis zu 25 bar aus, wobei es vorteilhaft ist, den Gasdruck in der Gießform vor der Infiltration unter den Atmosphärendruck abzusenken. Für den Fall, dass der Anteil an Gasporen in der Aluminiumlegierungsmatrix möglichst klein sein soll, sollte der mit Aluminiumlegierung infiltrierte Formkörper einem Nachdruck ausgesetzt werden, der wenigstens 100 mal größer als der Gasdruck vor der Infiltration ist.

Die notwendige Formstabilität erhält der Formkörper dadurch, dass die Siliziumpartikel über einen anorganischen Binder, vorzugsweise auf Oxid- oder Silikatbasis, oder durch Sintern miteinander verbunden sind.

Die Erfindung ist in den Zeichnungen beispielhaft dargestellt und wird nachstehend erläutert. Es zeigen:

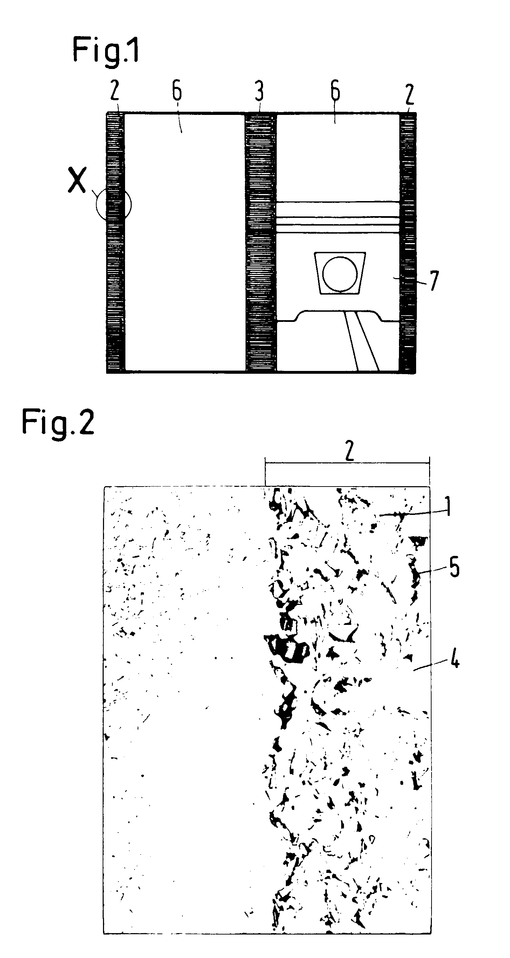

- Fig. 1: eine schematische ausschnittsweise Darstellung eines Längsschnittes durch ein Zylinderkurbelgehäuse,
- Fig. 2: einen Ausschnitt "X" der Fig. 1 in etwa 100-facher Vergrößerung,
- Fig. 3: eine schematische Darstellung eines aus mehreren Komponenten mit unterschiedlicher Härte aufgebauten Formkörpers.

Die Hohlräume eines aus Siliziumkörnern 1 mit einer mittleren Korngröße von 45 bis 55 µm bestehenden, hohlzylinderförmigen Formkörpers 2 sind unter Aufbringen eines vergleichsweise hohen Gießdrucks von 100 bar während des Gießens des Zylinderkurbelgehäuses 3 mit Umschmelzlegierung 4 des Typs AlSi9Cu infiltriert. Die Siliziumkörner 1 sind über einen anorganischen Binder 5 des Silikat-Typs miteinander verbunden. Das Silizium zeichnet sich durch eine hohe Lösungsfähigkeit in der Aluminiumlegierung aus, wodurch eine sichere Einbindung in der Matrix 4 der Aluminiumlegierung gewährleistet ist. Die Hohlräume des Formkörpers 2 nehmen ein Volumen von etwa 75 % ein und sind vollständig mit Aluminiumlegierung infiltriert. Der Siliziumanteil in der Zylindergleitfläche (6) beträgt 25 %. Nach dem Gießen wird die Zylinderbohrung mechanisch durch Vor- und Feinbohren bearbeitet und anschließend gehont. Der aus Aluminiumlegierung bestehende Kolben 7 benötigt keine besondere Beschichtung des Kolbenschafts.

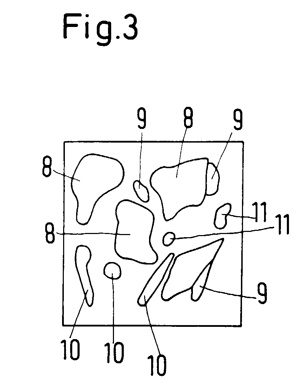

In Fig. 3 ist eine schematische Darstellung eines aus den Stoffkomponenten Silizium 8, Blei 9, Graphit 10, Siliziumcarbid 11 aufgebauten Formkörpers wiedergegeben, dessen Hohlräume mit Aluminiumlegierung 12 vollständig infiltriert sind.

## Patentansprüche

1. Gegossene Gleitlagerung zur Führung und Abstützung rotierender oder oszillierender, radial oder axial bewegter Maschinenteile (7), bestehend aus Leichtmetallmatrix (4), in die ein Teile der Gleitfläche (6) bildender, aus Partikeln (1) aus gegenüber der Leitmetallmatrix härterem Stoff aufgebauter Formkörper (2) mit offenen, mit Matrixmetall infiltrierten Hohlräumen eingegossen ist, wobei die offenen Hohlräume des im Wesentlichen von geschlossenen Hohlräumen freien Formkörpers (2) im Wesentlichen porenarm mit Matrixmetall (4) ausgefüllt sind, und der Abstand zwischen den in der Gleitfläche liegenden harten Partikel (1) des Formkörpers jeweils s 2 mm ist, **dadurch gekennzeichnet**, dass der Formkörper aus Siliziumpartikeln (1) aufgebaut ist und die Siliziumpartikel (1) des Formkörpers (2) über einen anorganischen Binder, vorzugsweise auf Oxid- oder Silikatbasis, miteinander verbunden sind und dass die Größe der in der Gleitfläche (6) liegenden Siliziumpartikel (1) des Formkörpers jeweils s 0,1 mm ist.

2. Gleitlagerung nach Anspruch 1, dadurch gekennzeichnet, dass der Volumenanteil der Siliziumpartikel (1) 5 bis 50 % beträgt.

3. Gleitlagerung nach Anspruch 1 oder 2, dadurch gekennzeichnet, dass der Formkörper (2) und die Leichtmetallmatrix (4) stoffschlüssig miteinander verbunden sind.

4. Gleitlagerung nach einem der Ansprüche 1 bis 3, dadurch gekennzeichnet, dass in den aus Siliziumpartikeln (1) aufgebauten Formkörper (2) ein oder mehrere weiche Stoffe, wie Graphit, Blei Molybdänsulfid, eingebettet sind.

5. Gleitlagerung nach einem der Ansprüche 1 bis 4, dadurch gekennzeichnet, dass die Partikel des Formkörpers (2) kugelförmige, körnige, gerade oder gekrümmte plattenförmige oder gerade oder gekrümmte stabförmige Gestalt besitzen.

6. Gleitlagerung nach einem der Ansprüche 1 bis 5, dadurch gekennzeichnet, dass der Formkörper (2) auf einen dünnwandigen Träger aus Blech, Sieb, Gewebematte oder Vliesmatte aufgebracht ist, der je nach Verwendungszweck als Hohlzylinder, Formschale oder dergleichen ausgebildet ist.

## Claims

1. Cast slide bearing for guiding and supporting rotating or oscillating, radially or axially moving machine parts (7), consisting of light-metal matrix (4), into which is cast a shaped body (2), which forms portions of the sliding surface (6) and is composed of particles (1) of material harder than the light-metal matrix and has open voids infiltrated with matrix metal, the open voids of the shaped body (2), which is substantially free of closed voids, being filled in with matrix metal (4) so as to be substantially of low porosity, and the distance between the hard particle [sic] (1) of the shaped body which lie in the sliding surface is in each case ≤ 2 mm, characterized in that the shaped body is composed of silicon particles (1) and the silicon particles (1) of the shaped body (2) are bonded to one another by an inorganic binder, preferably oxide- or silicate-based, and in that the size of the silicon particles (1) of the shaped body which lie in the sliding surface (6) is in each case ≤ 0.1 mm.

2. Slide bearing according to Claim 1, characterized in that the proportion by volume of the silicon particles (1) is 5 to 50%.

3. Slide bearing according to Claim 1 or 2, characterized in that the shaped body (2) and the light-metal matrix (4) are materially bonded to one another.

4. Slide bearing according to one of Claims 1 to 3, characterized in that one or more soft materials, such as graphite, lead [lacuna] molybdenum sulphide, are embedded in the shaped body (2) composed of silicon particles (1).

5. Slide bearing according to one of Claims 1 to 4, characterized in that the particles of the shaped body (2) are of spherical, granular, straight or curved plate-shaped or straight or curved rod-shaped form.

6. Slide bearing according to one of Claims 1 to 5, characterized in that the shaped body (2) is deposited on a thin-walled carrier which is made of sheet metal, a screen, a woven mat or a nonwoven mat and is designed as a hollow cylinder, a shaped shell or the like, according to the intended use.

## Revendications

1. Palier lisse moulé pour le guidage et le soutien d'éléments de machine (7) rotatifs ou oscillants selon une direction radiale ou axiale, consistant en une matrice en alliage léger (4), dans laquelle est noyé un élément profilé (2) constitué de particules (1) en matériau plus dur que la matrice en alliage léger et formant des portions de la surface de glissement (6), ledit élément profilé présentant des espaces creux infiltrés par le métal matriciel, lesdits espaces creux de l'élément profilé (2), qui est sensiblement exempt d'espaces creux fermés, étant remplis, avec essentiellement peu de pores, par du métal matriciel (4), et la distance entre les particules dures (1) présentes dans la surface de glissement de l'élément profilé étant inférieure ou égale à 2 mm, caractérisé en ce que l'élément profilé est constitué de particules de silicium (1), en ce que lesdites particules de silicium (1) de l'élément profilé (2) sont reliées entre elles par un liant inorganique, de préférence à base d'oxyde ou de silicate, et en ce que la taille des particules de silicium (1) présentes dans la surface de glissement (6) de l'élément profilé est inférieure ou égale à 0,1 mm.

2. Palier lisse selon la revendication 1, caractérisé en ce que le pourcentage en volume de particules de silicium (1) est compris entre 5 et 50 %.

3. Palier lisse selon la revendication 1 ou 2, caractérisé en ce que l'élément profilé (2) et la matrice en alliage léger (4) sont reliés entre eux par affinité de matières.

4. Palier lisse selon l'une des revendications 1 à 3, caractérisé en ce que dans l'élément profilé (2) constitué de particules de silicium (1), sont incorporées une ou plusieurs substances malléables, telles que le graphite, le plomb, le sulfure de molybdène.

5. Palier lisse selon l'une des revendications 1 à 4, caractérisé en ce que les particules de l'élément profilé (2) affectent une forme de sphère, de grain, de plaquette droite ou incurvée, de bâtonnet droit ou incurvé.

6. Palier lisse selon l'une des revendications 1 à 5, caractérisé en ce que l'élément profilé (2) est placé sur un support à paroi mince en tôle, toile, mat tissé ou non tissé, qui, suivant l'application, se présente sous la forme d'un cylindre creux, d'une coquille moulée ou similaire.
